(19) **Europäisches Patentamt**

**European Patent Office**

**Office européen des brevets**

(11) **EP 1 726 940 A1**

(12) **EUROPEAN PATENT APPLICATION**
published in accordance with Art. 158(3) EPC

(43) Date of publication:
**29.11.2006 Bulletin 2006/48**

(51) Int Cl.:
***G01N 21/64*** *(2006.01)*

(21) Application number: **05720821.7**

(22) Date of filing: **15.03.2005**

(86) International application number:
**PCT/JP2005/004566**

(87) International publication number:
**WO 2005/088280 (22.09.2005 Gazette 2005/38)**

(84) Designated Contracting States:
**DE FR GB**

(30) Priority: **17.03.2004 JP 2004076342**

(71) Applicant: **Olympus Corporation**
**Tokyo 151-0072 (JP)**

(72) Inventors:
• **MITANI, Yoshiyuki**
**c/o Intell. Prop. Support Dept.**
**2-3 Kuboyama**
**Hachioji-shi**
**Tokyo 192-8512 (JP)**

• **NAMBA, Akihiro**
**c/o Intell. Prop. Support Dept.**
**2-3 Kuboyama**
**Hachioji-shi**
**Tokyo 192-8512 (JP)**

• **SHIMADA, Yoshihiro**
**c/o Intell. Prop. Support Dept.**
**2-3 Kuboyama**
**Hachioji-shi**
**Tokyo 192-8512 (JP)**

(74) Representative: **von Hellfeld, Axel**
**Wuesthoff & Wuesthoff**
**Patent- und Rechtsanwälte**
**Schweigerstrasse 2**
**81541 München (DE)**

(54) **LIGHT MEASUREMENT APPARATUS AND LIGHT MEASUREMENT METHOD**

(57) A light measurement apparatus comprises a container (7) which includes a sample tank (8), a lens (5) which condenses light from a sample accommodated in the sample tank, a photodetector (13) which detects light from the sample, the light having been transmitted through the lens, position detecting means (15) for detecting a position of the sample tank based on a detection output from the photodetector, and position adjusting means (18, 19) for setting the container or the lens based on a detection output from the position detecting means.

FIG. 8

EP 1 726 940 A1

## Description

Technical Field

The present invention relates to a light measurement apparatus and a light measurement method which mark a sample accommodated in a microplate with a fluorescent material, and irradiate this sample with light to perform fluorescence correlation spectroscopy (FCS) of an intensity fluctuation of fluorescence emitted by the sample or correlation analysis of an intensity fluctuation of fluorescence or an intensity fluctuation of scattered light emitted by a microscopic substance such as a carrier particle.

Background Art

In recent years, a configuration, an interaction or the like of a cell of an organism or a protein material is examined by using light. For example, a sample such as a protein material is directly marked with fluorescence, insides of a plurality of wells as circular grooves of a microplate accommodating the sample are irradiated with light such as a laser beam to excite a fluorescent material, and an intensity fluctuation of the fluorescence is detected; thereby examining a reaction or a change in conformation of the sample. According to this measurement method using light, a coupling reaction of a protein material such as signal transmission which occurs in or out of a living cell can be accurately measured by highly sensitive fluorescence detection.

Meanwhile, a microplate is extensively used in such measurement. That is because using the microplate can measure many samples at a time with a small sample amount of the level of several tens of micro-liters. Although the usually utilized microplate has a size of 127 mm × 85 mm and 96 wells, a microplate having many wells is commonly used as a recent tendency in order to save a sample amount or realize a high throughput. However, when many wells are arranged in the microplate, a size per well is reduced. A diameter of one well is approximately 4.5 mm in a microplate having 384 wells, whereas a diameter is as small as approximately 1.5 mm in a microplate having 1,536 holes.

When such a microplate provided with many very small wells is held on a sample stage and a light irradiation position is adjusted by a regular positioning method such as visual confirmation, using an objective lens with a high magnifying power as a condenser lens makes it difficult to accurately set a light sight on a measurement well, resulting in a risk of displacement. In order to accurately manage measurement data for each well, positional data must be matched with a measurement region, and hence wells of the microplate must be positioned with extreme accuracy.

As prior art of positioning a microplate, the following two methods have been proposed.

According to a method disclosed in Jpn. Pat. Appln. KOKAI Publication No. 2002-14035, some of wells are determined as "position recognizing wells", and a fluorescent material is injected into these wells so that a position of each well can be visually confirmed. Further, an entire region of a microplate is illuminated with light, fluorescence emitted by the fluorescent material included in a sample in each well is collectively captured by using a CCD camera, and an intensity of fluorescence emitted by the sample in each well is measured with respect to all the wells.

Furthermore, according to a method disclosed in specification of U.S. Patent No. 6,258,326, a microplate itself is directly processed, a plurality of reference grooves are arranged, and a coordinate of each reference groove is optically measured to position the microplate. In particular, when the number of wells is as large as 1,536, the plurality of reference grooves are arranged between the wells to further increase positioning accuracy.

Disclosure of Invention

However, in the method described in Jpn. Pat. Appln. KOKAI Publication No. 2002-14035, although a position of the microplate can be recognized, but there is a problem that a well used for fluorescence marking cannot be used for measurement and a fluorescent dye for recognition of a position which is different from a fluorescent dye for measurement must be additionally prepared. Moreover, in the method described in Jpn. Pat. Appln. KOKAI Publication No. 2002-14035, since the microplate is projected in a large region, many wells are closely set in a narrow region in an image when the number of wells is as large as 1,536, and displacement may occur in a projected image or projected images of a plurality of wells may overlap each other when the microplate is obliquely inclined even if only slightly. Therefore, accurate positioning of the microplate is hard to perform.

In the method described in the specification of U.S. Patent No. 6,258,326, although the microplate can be highly accurately positioned, a specially-processed microplate is required. Additionally, since a configuration of each reference groove itself is complicated, processing steps become complicated. Therefore, it cannot be the that this method has general versatility, and there is a problem that a usually available microplate cannot be used as it is.

In view of the above-described problems, it is an object of the present invention to provide a light measurement apparatus and a light measurement method which use a usually available microplate and can simply measure a position of each well in the microplate without a need of newly providing special optical means.

According to one aspect of the present invention, there is provided a light measurement apparatus comprising: a container which includes a sample tank; a lens which condenses light from a sample accommodated in the sample tank; a photodetector which detects light from the sample transmitted through the lens; position detecting means for detecting a position of the sample tank based on a detection output from the photodetector; and position adjusting means for setting the container or the lens based on a detection output from the position detecting means.

Further, according to one aspect of the present invention, there is provided a light measurement method comprising: holding a container which includes a sample tank, and condensing light from the container by a lens; detecting the light from the container by a photodetector, wherein the light passes through the lens; and moving a position of the lens or a position of the container based on a detection output from the photodetector in such a manner that an optical axis of the lens runs through the sample tank.

Brief Description of Drawings

FIG. 1 is a view showing a configuration of a light measurement apparatus according to a first embodiment of the present invention.
FIG. 2 is an enlarged schematic view showing a microplate and an objective lens.
FIG. 3 is a view showing an operation of obtaining a central point of each well.
FIG. 4 is a view showing an operation of obtaining a central point of a well.
FIG. 5A is a view showing a processing method of a detection signal.
FIG. 5B is a view showing a processing method of a detection signal.
FIG. 6A is a view showing an operation of obtaining a central point of a well.
FIG. 6B is a view showing the operation of obtaining the central point of the well.
FIG. 6C is a view showing the operation of obtaining the central point of the well.
FIG. 6D is a view showing the operation of obtaining the central point of the well.
FIG. 6E is a view showing the operation of obtaining the central point of the well.
FIG. 7 is a view illustrating a method of obtaining a coordinate of a central position.
FIG. 8 is a view showing a configuration of a light measurement apparatus according to a third embodiment of the present invention.
FIG. 9 is a view showing a configuration of a light measurement apparatus according to a fourth embodiment of the present invention.
FIG. 10A is a view showing a configuration of a microplate and wells.
FIG. 10B is a view showing a configuration of a microplate and wells.
FIG. 11A is a view showing an operation of obtaining a central point of a well.
FIG. 11B is a view showing the operation of obtaining the central point of the well.
FIG. 11C is a view showing the operation of obtaining the central point of the well.
FIG. 11D is a view showing the operation of obtaining the central point of the well.
FIG. 11E is a view showing the operation of obtaining the central point of the well.

Best Mode for Carrying Out the Invention

[First Embodiment]

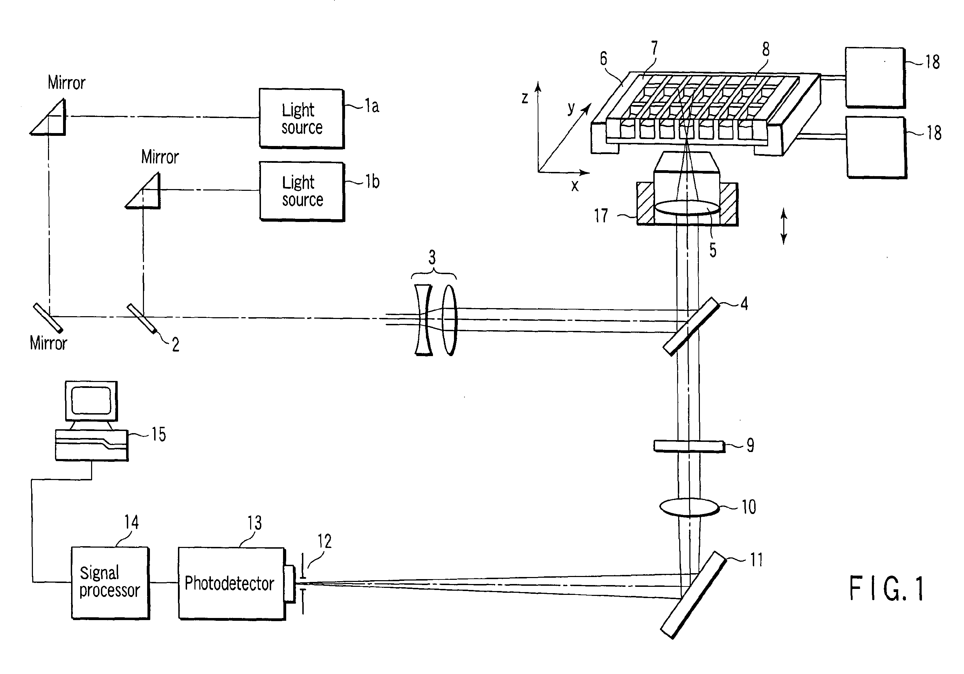

FIG. 1 is a view showing a configuration of a light measurement apparatus according to a first embodiment of the present invention. A basic apparatus configuration of the light measurement apparatus according to this embodiment is based on a confocal optical microscope. A configuration and operation of the light measurement apparatus will now be described with reference to FIG. 1.

The light measurement apparatus according to this embodiment is provided with two types of light sources 1a and 1b. A helium-neon laser (oscillation output: 2 mW, wavelength: 633 nm) is used for the light source 1a, and an argon laser (oscillation output: 10 mW, wavelength: 488 nm) is used for the light source 1b. Traveling directions of laser beams emitted by the light source 1a and the light source 1b are changed by a mirror, and then light paths of the two laser beams are combined into one light path by a dichroic mirror 2. The combined light beam is converted into a collimated light beam whose beam diameter has been increased by a lens 3, travels, is reflected by a dichroic mirror 4, and reaches an objective lens 5.

Light condensed by the objective lens 5 is applied to the inside of each well 8 in a microplate 7 mounted and fixed on a sample stage 6. A sample stage XY axis driving mechanism 18 drives the sample stage 6 to adjust a horizontal position of the microplate 7 and an objective lens Z axis adjusting mechanism 17 drives the objective lens 5 to adjust a vertical position of the microplate 7 in such a manner that a sample in each well 8 is irradiated with a region (which will be referred to as a confocal region) condensed by the objective lens 5. It is to be noted that a plane on which the microplate 7 is driven by the sample stage 6 is called an XY plane, and an axis along which the objective lens 5 is driven by the objective lens Z axis adjusting mechanism 17 is called a Z axis. The Z axis is an axis vertical to the XY plane.

The microplate 7 is formed of a generally used resin and glass as materials. As shown in FIG. 1, many wells 8 are arrange in the microplate 7. Although not shown, a bottom surface of each well 8 is a window formed of a material such as glass through which visible light is transmitted.

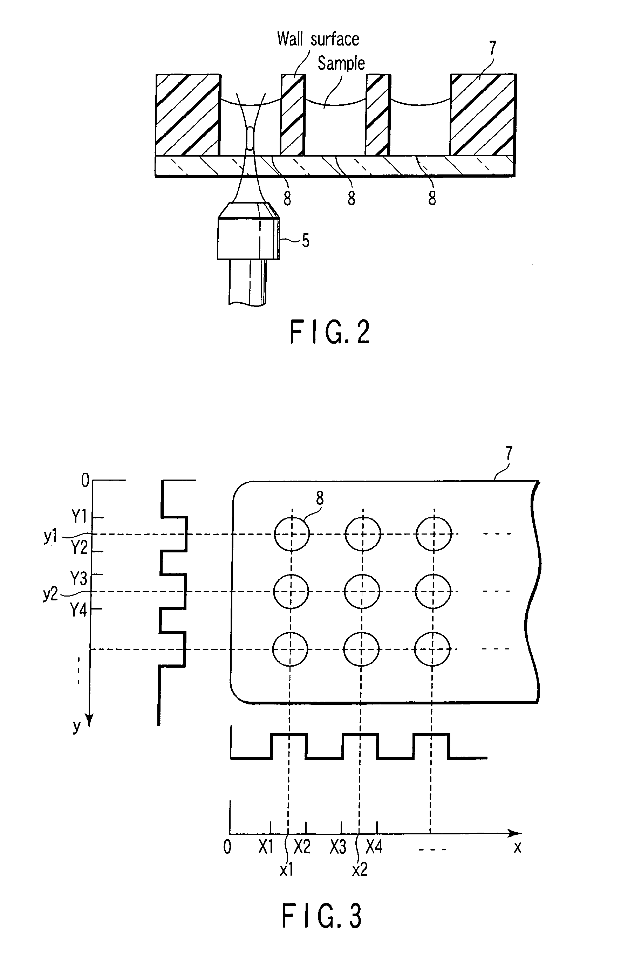

FIG. 2 is an enlarged schematic view showing the microplate 7 and the objective lens 5 arranged below the microplate 7. The objective lens 5 is configured to face the bottom surface of each well 8.

As the objective lens 5, for example, a x40 immersion objective lens (NA0.9) is used, and a space between the bottom surface of the microplate 7 and an end of the objective lens 5 is filled with immersion water. In this embodiment, a focal position of a laser beam is a central part of the well 8 in the horizontal direction (X-Y axis), and a position which is 100 $\mu$m above an upper wall position of the bottom surface of the well 8 in the vertical direction (Z axis). Further, as to a size and a shape of a confocal region in the well 8, the well 8 has a substantially cylindrical shape having a diameter of approximately 0.6 $\mu$m and a length of approximately 2 $\mu$m.

The laser beam condensed by the objective lens 5 excites fluorescent molecules in the sample, and fluorescence is generated by the fluorescent molecules. The generated fluorescence is again transmitted through the objective lens 5 and the dichroic mirror 4, and enters a barrier filter 9.

The dichroic mirror 4 is manufactured by applying multiplayer film coating on one side of a flat glass sheet so that reflection spectral characteristics become optimum. It is to be noted that, as the dichroic mirror 4, not only a planar mirror but also a prism-shaped mirror can be used.

The barrier filter 9 is formed into a discotic shape and has permeation characteristics matched with an emission spectrum of the fluorescence. That is, it transmits light in a wavelength band of the fluorescence as signal light alone therethrough. As a result, it is possible to block off scattered light generated in the sample container or noise light which is reflected from a wall or the like of the well 8 and returns to an incident light path. That is because the noise light as background light is blocked off since its wavelength is different from that of the fluorescence.

The signal light transmitted through the barrier filter 9 is transmitted through a lens 10 to be converted into condensed light, reflected by a mirror 11, and condensed on a pinhole surface of a pinhole 12 arranged behind the lens 10. That is, an opening surface of the pinhole 12 matches with a focal plane of the lens 10. A diameter of the pinhole 12 is variable. The background light can be removed from a region other than a light confocal region formed in the well 8 by the pinhole 12.

A photodetector 13 is arranged in the vicinity of a rear position of the pinhole 12. The signal light received by the photodetector 13 is weak light and has a photon pulse. Therefore, as the photodetector 13, for example, an avalanche photodiode (APD) or a weak photodetector such as a photomultiplier is used. The photodetector 13 converts the signal light into a photocurrent pulse which is an electric signal. The converted electric signal enters a signal processor 14 to be amplified and waveform-shaped, and it is converted into an on/off voltage pulse to be led to a computer 15.

This voltage pulse signal is stored as data in a memory (not shown) in the computer 15, and then an arithmetic operation such as correlation analysis is carried out based on this data. Furthermore, analysis results such as an intensity of the fluorescence, a life duration of the fluorescence, an auto-correlation function of an intensity fluctuation of the obtained fluorescence or a cross-correlation function are presented on a screen of the computer 15.

Moreover, the computer 15 controls each portion of the light measurement apparatus to measure a central coordinate of the bottom surface of the well 8 in the microplate 7, operates the sample stage XY axis driving mechanism 18 based on the measured value, and then moves the microplate 7 in such a manner that a central position of the bottom surface of the well 8 is irradiated with light emitted by the light sources.

It is to be noted that Rhodamine Green (RhG) and Cy5 are used as fluorescent materials in this embodiment.

Rhodamine Green has a peak wavelength of absorption in the vicinity of 490 nm and a peak of an emission wavelength in the vicinity of 530 nm. Therefore, Rhodamine Green is excited by the argon laser. Additionally, Cy5 has a peak wavelength of absorption in the vicinity of 640 nm and a peak of an emission wavelength in the vicinity of 670 nm. Therefore, Cy5 is excited by the helium-neon laser.

A description will now be given as to a method of positioning a central position of the well 8 in the microplate 7 according to the first embodiment.

Procedure 1: a well 8 as a reference is first determined in the microplate 7. For example, a well 8 at an uppermost left corner of the microplate 7 shown in FIG. 3 is determined as a reference well 8, and a central coordinate of this well 8 is determined as $(x_1, y_1)$.

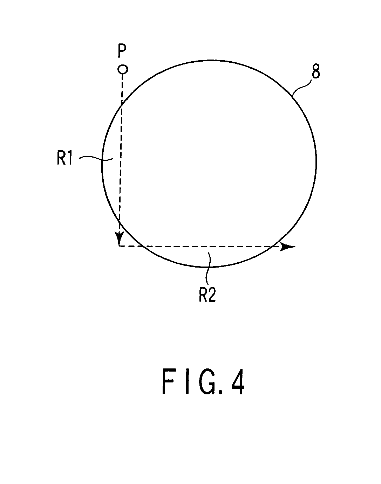

Procedure 2: the held sample stage 6 is first moved in the XY plane by operating the sample stage XY axis driving mechanism 18, and a spot of a laser beam is arranged on a wall upper surface which is the outside of the reference well 8 at the uppermost left corner. At this time, as shown in FIG. 4, the spot of the laser beam is a position P in the vicinity of an upper end of the well 8.

Procedure 3: then, as shown in FIG. 4, the sample stage is moved on a trajectory R1 along a y axis, and a count rate as an intensity of light generated by the well 8 in the microplate 7 at this time is read.

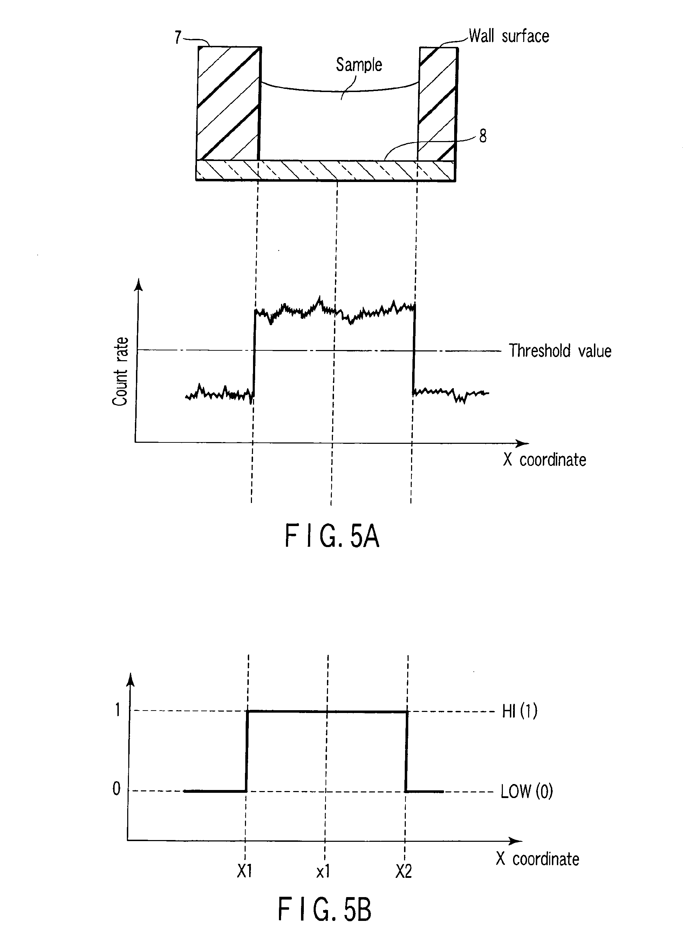

A detection signal output by the photodetector 13 is a signal in which noise is superimposed on a count rate signal which is an intensity of light as shown in FIG. 5A. A threshold value is determined with respect to this detection signal, and waveform shaping is carried out to convert the detection signal into an on/off digital signal shown in FIG. 5B.

Procedure 4: a y coordinate at the center of a rectangular shape of the obtained on/off digital signal is acquired by a calculation.

Procedure 5: subsequently, as shown in FIG. 4, the sample stage is moved on a trajectory R2 along an x axis, and a count rate as an intensity of light generated by the well 8 in the microplate 7 at this time is read. Additionally, the signal processing described in Procedure 3 is carried out to obtain an on/off digital signal.

Procedure 6: an x coordinate at the center of a rectangular shape of the obtained on/off digital signal is acquired by a calculation.

If the coordinate of the central point of one well 8 is obtained by the above-described procedures, moving the sample stage 6 can acquire a central point of each well 8.

For example, as shown in FIG. 3, a y coordinate of the central point is fixed, the sample stage 6 is moved along the x axis to record a detection output with time, thereby detecting an x coordinate of a boundary wall surface of the well 8. It is assumed that $X_1$ is an x coordinate of a first signal obtained from a wall surface of the well 8, and $X_2$ is an x coordinate of the next signal obtained from the wall surface of the well 8. Then, X coordinates are sequentially determined. Further, an x coordinate ($x_n$) of a central point of an nth well 8 can be obtained based on the following Expression (1).

$$x_n = X_{2n-1} + (X_{2n} - X_{2n-1})/2 \qquad \text{… Expression (1)}$$

$X_1$: X coordinate at a left end of a wall surface of a first well 8
...
$X_2$: X coordinate at a right end of the wall surface of the first well 8
...
$X_{2n-1}$: X coordinate at a left end of a wall surface of an nth well 8
$X_{2n}$: X coordinate at a right end of the wall surface of the nth well 8

Likewise, an x coordinate at a central point is fixed, and the sample stage 6 is moved along the y axis, thereby obtaining a y coordinate ($y_n$) at the central point of the nth well 8 based on the following Expression (2)

$$y_n = Y_{2n-1} + (Y_{2n} - Y_{2n-1})/2 \qquad \text{… Expression (2)}$$

$Y_1$: Y coordinate at the left end of the wall surface of the first well 8

...

$Y_2$: Y coordinate at the right end of the wall surface of the first well 8

...

$Y_{2n-1}$: Y coordinate at the left end of the wall surface of the nth well 8

$Y_{2n}$: Y coordinate at the right end of the wall surface of the nth well 8

Moving the sample stage 6 in this manner can obtain the central point of the bottom surface of each of all the wells 8 in the microplate 7. Moreover, when measuring each well 8, accurate positioning can be performed by moving the sample stage 6 based on the obtained central position information of each well 8 in such a manner that a spot of the laser beam is placed at the center of the bottom surface of each well 8.

[Second Embodiment]

Although an apparatus configuration of a light measurement apparatus according to a second embodiment of the present invention is the same as that according to the first embodiment, procedures of obtaining a central coordinate of each well 8 are different from those in the first embodiment. Therefore, like reference numerals denote parts equal to those in the first embodiment, thereby eliminating the detailed explanation.

A description will now be given as to a method of positioning a central position of each well 8 in a microplate 7 according to the second embodiment.

Procedure 1: a well 8 as a reference in the microplate 7 is determined in advance. For example, a well 8 at an uppermost left corner of the microplate 7 shown in FIG. 3 is determined as a reference well 8, and a central coordinate of this well 8 is determined as $(x_1, y_1)$.

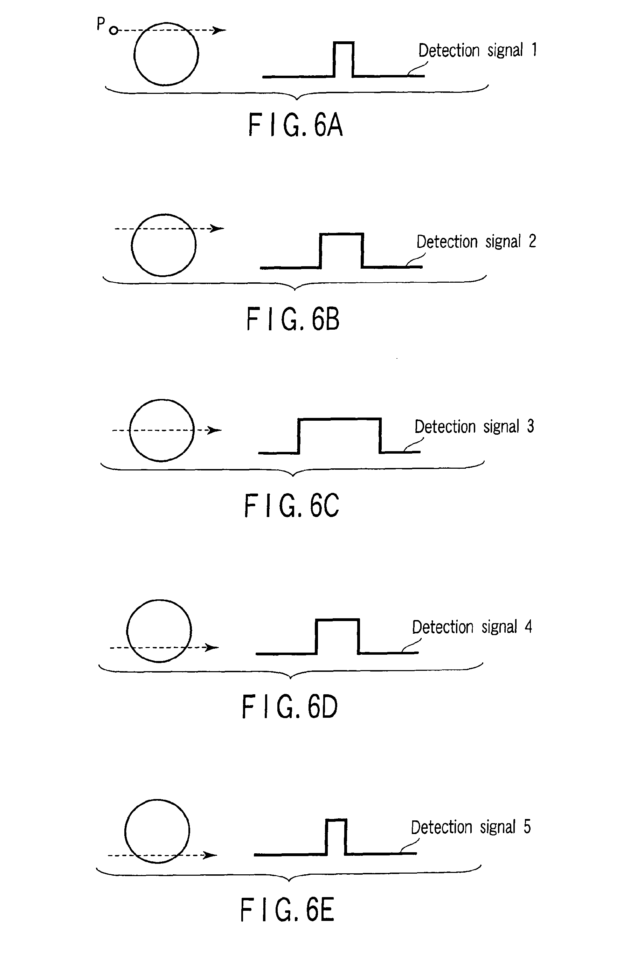

Procedure 2: a held sample stage 6 is moved in an XY plane by operating a sample stage XY axis driving mechanism 8 to arrange a spot of a laser beam on a wall upper surface which is the outside of the reference well 8 at the uppermost left corner. At this time, the spot of the laser beam is a position P in the vicinity of an upper end of the well 8 as shown in FIG. 6A.

Procedure 3: then, the sample stage 6 is moved along an x axis as shown in FIG. 6A. At this time, a count rate which is an intensity of light generated by the well 8 in the microplate 7 is read.

A detection signal output by a photodetector 13 is a signal in which noise is superimposed on a count rate signal which is an intensity of light as shown in FIG. 5A. A threshold value is set with respect to this detection signal, waveform shaping is performed, and this detection signal is converted into an on/off digital signal shown in FIG. 5B, thereby obtaining a detection signal.

Procedure 4: the sample stage 6 is moved along a y axis by a predetermined distance to change a y coordinate, and Procedure 3 is executed to obtain a detection signal 1.

Procedure 5: as shown in FIGS. 6B to 6E, Procedures 3 and 4 are repeatedly executed to obtain detection signals 2 to 5.

Procedure 6: the detection signals 1 to 5 are compared, and a value of the y axis which outputs a detection signal 3 having the largest width of a rectangular shape is a y coordinate $(y_1)$ which gives the central position of the well 8.

Procedure 7: Procedures 2 to 6 are repeated while moving the sample stage 6 along the y axis. Moreover, an x coordinate $(x_1)$ which gives the central position of the well 8 is obtained.

After the coordinate of the central point of one well 8 is obtained in this manner, moving the sample stage 6 can acquire a central point of each of all the wells 8 in the microplate 7 like the first embodiment.

[Variation of Second Embodiment]

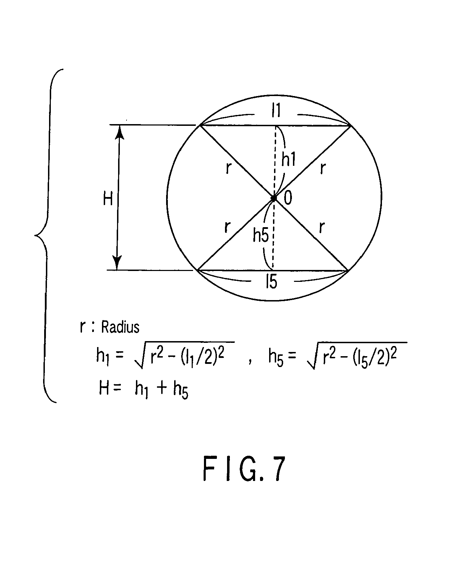

The method of detecting x and y coordinates at a maximum width position on a boundary wall surface of each well 8 is not restricted to the method shown in FIGS. 6A to 6E. For example, after the detection signal 1 is obtained, the sample stage 6 is moved along the y axis by a fixed moving distance H, and the sample stage 6 is moved from this position along the x axis, thereby obtaining the detection signal 5. Then, a coordinate at a central position O is obtained based on a geometric relationship depicted in FIG. 7, and this may be determined as the y coordinate at the maximum width position on the boundary wall surface of the well 8.

Incidentally, since the respective wells 8 basically have the same diameter and they are arranged on the microplate 7 at equal intervals, coordinates at respective central points of a plurality of representative wells 8, e.g., wells 8 at four corners may be obtained and coordinates at central points of other wells 8 may be acquired by a calculation without obtaining coordinates at central points of all the wells 8 on the microplate 7.

Alternatively, coordinates at central points of wells 8 in one lateral column and one vertical column at endmost positions may be obtained, then coordinates at central points of all the wells 8 may be acquired by a calculation, and positioning may be executed by using the sample stage 6. Even if the microplate 7 is obliquely inclined, since obtaining coordinates at central points of at least two wells 8 can calculate a degree of inclination, positions of wells 8 can be determined considering this inclination.

It is to be noted that the above-described measurement of the central point of each well 8 and driving control over the sample stage 6 based on this measured value can be realized when the computer 15 controls the respective portions in the light measurement apparatus in cooperation.

That is, the computer 15 controls all of the respective portions in the light measurement apparatus to measure a central coordinate of a bottom surface of each well 8 in the microplate 7, operates the sample stage XY axis driving mechanism 18 based on this measured value, and then moves the microplate 7 in such a manner that a central position of the bottom surface of this well 8 is irradiated with light emitted by the light sources.

[Third Embodiment]

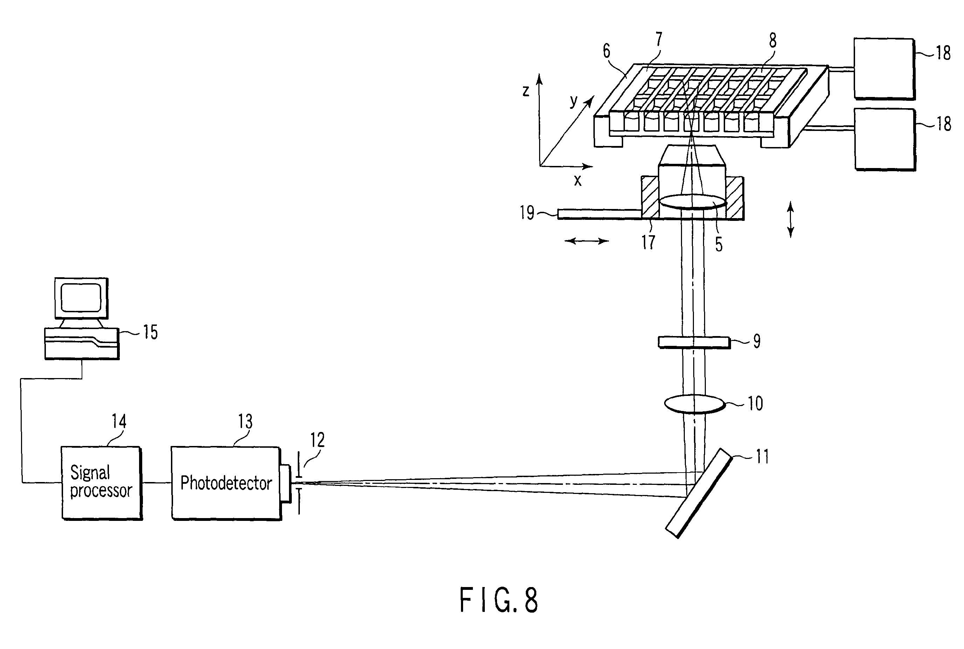

FIG. 8 is a view showing a configuration of a light measurement apparatus according to a third embodiment of the present invention. A basic configuration of the third embodiment is the same as the configuration of the first embodiment shown in FIG. 1 except that light sources are not required, and hence like reference numerals denote like parts, thereby eliminating the detailed explanation.

An objective lens plane moving mechanism 19 is connected with an objective lens 5, and driving by a stepping motor is controlled by a computer (not shown) to match a position of each well 8 with an optical axis of the objective lens 5. An adjustment range of the objective lens plane moving mechanism 19 is as small as several tens of $\mu$m or below, and the adjustment is carried out as a final adjustment of a well position. Here, the objective lens plane moving mechanism 19 may be driven by using not only the stepping motor but also an ultrasonic motor.

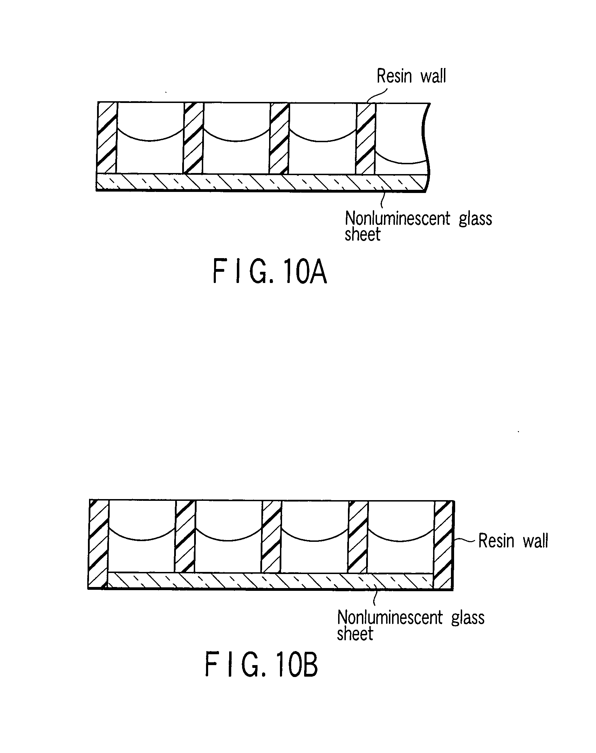

In this embodiment, fluorescence generated by a resin of a microplate main body is determined as a measurement signal. As shown in FIG. 10A, a wall of each well 8 in the microplate 7 is formed of a resin, and a bottom surface of the same has a configuration obtained by bonding a glass sheet. A resin portion of a microplate main body is formed of a mold member obtained by molding. As a material, it is possible to use polycarbonate, polystyrene, acrylic and others. When such a resin is used for at least a wall portion of the microplate main body, fluorescence is generated by the resin portion. However, in this case, an optically transparent and nonluminescent glass sheet is used for each well portion, and it is bonded to the resin portion of the microplate main body. It is to be noted that the microplate 7 may be manufactured by fitting the resin portion of the microplate main body to the nonluminescent glass sheet constituting the bottom surface as shown in FIG. 10B.

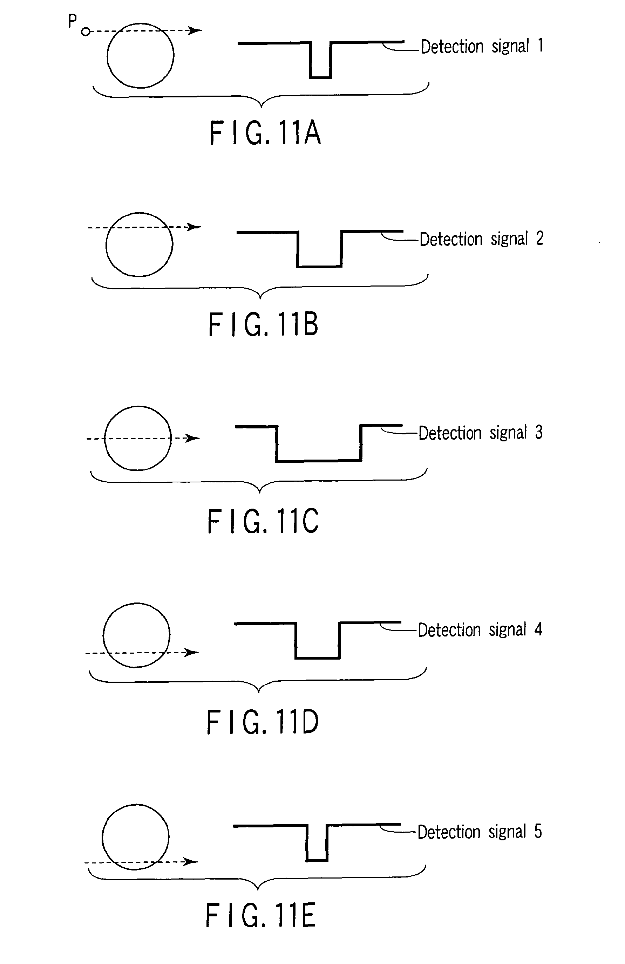

Measurement procedures will now be described with reference to FIGS. 11A to 11E. First, the microplate 7 is set on the sample stage 6 in a state where a sample is not accommodated in each well. The sample stage 6 is moved by a small distance along the y axis. At this time, a point P which is a laser spot describes a trajectory indicated by an arrow. At this time, fluorescence cannot be basically obtained from each well portion, but fluorescence is generated by at least a wall portion of the microplate main body. Based on this detection signal, like the second embodiment shown in FIGS. 6A to 6E, a central position of each well 8 is determined. It is good enough to perform the same operation with respect to the x axis direction as that executed in regard to the y axis direction.

Then, a power supply of the objective lens moving mechanism 19 is turned on, an optimum position of the objective lens on the xy plate is determined while detecting a fluorescence signal from the wall portion, and the objective lens 5 is moved by a necessary distance. After determining the central position of each well 8, the sample is injected into the well 8, and light emission from the sample is detected. In this embodiment, since the fluorescence generated by the resin of the microplate main body is determined as a measurement signal, the sample may be or may not be accommodated in each well.

When the sample is accommodated in each well and a light intensity of light emission from the sample is large, an output signal from the photodetector becomes larger than the fluorescence generated by the resin of the microplate main body when the well portion faces the objective lens. Therefore, on/off states of detection outputs from the photodetector are reversed as compared with detection signals shown in FIGS. 11A to 11E. On the other hand, when the sample is accommodated in each well and a light intensity of the fluorescence generated by the sample is smaller than that of the fluorescence generated by the resin of the microplate main body, output signals from the photodetector when each well portion faces the objective lens become equal to those shown in FIGS. 11A to 11E.

The apparatus shown in FIG. 8 is likewise used when measuring a luminous phenomenon such as chemiluminescence or bioluminescence. A well position determining method is substantially the same as that of the second embodiment shown in FIGS. 6A to 6E, and light emission caused due to the sample from the well 8 is detected and determined.

A description will now be given as to an example where the apparatus shown in FIG. 8 is used to perform enzymatic immunoassay of, e.g., alpha-fetoprotein (AFP) which is a major cancer marker. First, an anti-AFP antibody is sensitized to glass particles having a diameter of approximately 1 to 10 $\mu$m, marked with oxygen alkaline phosphatase, suspended in a buffer fluid, and accommodated in each well. A specimen material such as blood is added to cause an antigen antibody reaction at a room temperature. Furthermore, glass particles which have not contributed to the reaction are removed by cleaning, and a chemiluminescent substrate AMPPD (2-dioxetane disodium salt) is added to the remaining solution. At this time, AMPPD reacts with oxygen alkaline phosphatase, and chemiluminescence thereby occurs. A luminescence intensity of this chemiluminescence is measured by the photodetector, thus determining an AFP concentration in the specimen material.

[Fourth Embodiment]

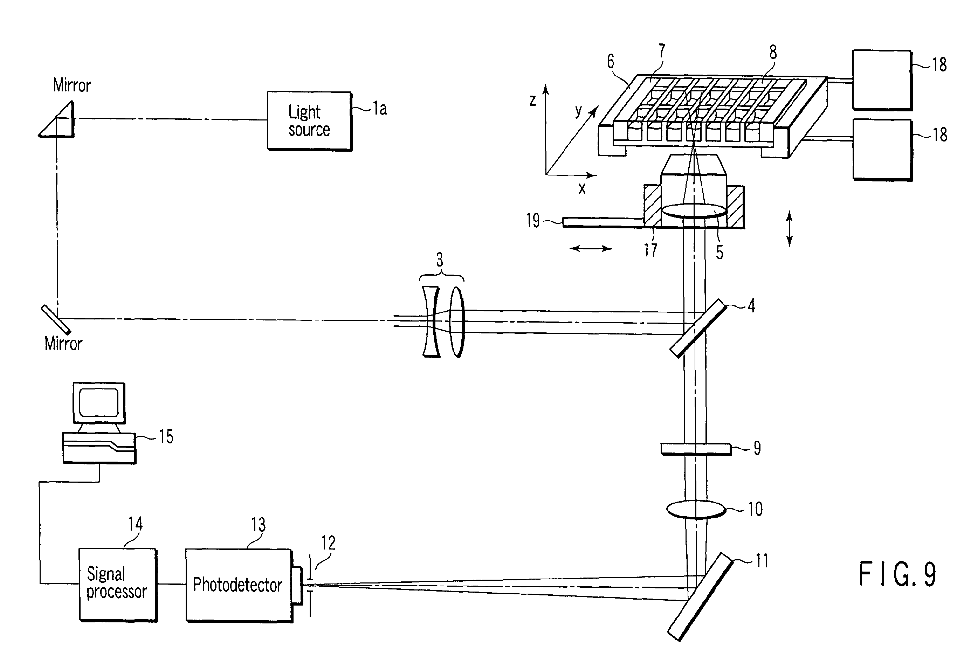

FIG. 9 is a view showing a configuration of a light measurement apparatus according to a fourth embodiment of the present invention. In the fourth embodiment, a resin portion of a microplate main body is irradiated with a laser beam, and fluorescence generated by this resin portion is measured to detect a position of each well. Since a basic configuration of the fourth embodiment is the same as that of the first embodiment except that the number of light source is one, like reference numerals denote like parts, thereby eliminating the detailed explanation.

As a light source, a helium-cadmium laser having an output of 50 mW and a wavelength of 325 nm is used.

Although an argon laser having a wavelength of 488 nm or a helium-neon laser having a wavelength of 633 nm may be used as the light source like the first embodiment, using the helium-cadmium laser having a wavelength of 325 nm can obtain a further high fluorescence intensity since its wavelength is close to an absorption wavelength of a resin constituting the microplate main body.

After light emitted by the light source 1c is reflected by mirrors twice, the light is led to a lens 3 to provide collimated light. This collimated light is reflected by a dichroic mirror 4 to be led to an objective lens 5, and condensed onto a microplate 7.

Measurement procedures will now be described with reference to FIGS. 11A to 11E. First, the microplate 7 is set on a sample stage 6 in a state where a sample is not accommodated in each well 8. The microplate main body is irradiated with the light from the light source 1c through the objective lens 5. The sample stage 6 is moved by a small distance along a y axis. At this time, a point R which is a laser spot describes a trajectory indicated by an arrow. At this time, fluorescence cannot be basically obtained from each well portion, but the fluorescence is generated by at least a wall portion of the microplate main body. A central position of each well 8 is determined based on this detection signal like the second embodiment shown in FIGS. 6A to 6E. It is good enough to perform the same operation with respect to an x axis direction as that executed in the y axis direction.

Then, a power supply of an objective lens moving mechanism 19 is turned on, and an optimum position of the objective lens 5 on an xy plane is determined to move the objective lens 5 by a necessary distance. After determining an optimum position of the well 8, a sample is injected into the well 8 to detect light emission from the sample. In this embodiment, in order to determine fluorescence generated by the resin of the microplate main body as a measurement signal, the sample may be or may not be accommodated in each well.

It is to be noted that the description has been given as to the microplate 7 having the round wells 8 in this embodiment, but the present invention is not restricted thereto, and a central position of each well 8 can be determined by the same operation in the microplate 7 having, e.g., rectangular wells 8. Furthermore, the number of wells is not restricted to 96, and 384 wells or the like can be used.

Moreover, measurement can be likewise performed with respect to chemiluminescence or bioluminescence.

[Effects of Embodiment]

In the foregoing embodiment, the commonly available microplate 7 is used as it is, a position of each well 8 in the microplate 7 is optically measured, a central position of the same on the XY plane is obtained, and a light spot position is accurately positioned in order to measure the sample. Additionally, at this time, optical means for measuring a position of each well 8 in the microplate 7 is not specially arranged, but the optical system which measures the sample is used for position measurement as it is, and hence the structure is simple.

Further, although the microplate 7 is used to calculate a reference position to accurately grasp a position of each well 8, the well 8 may be a well 8 in which the sample is accommodated or a well 8 in which a commonly used fluorescence material is accommodated. Therefore, a special chemical is not required, and the wells 8 in the microplate 7 are not wastefully used.

Furthermore, although determining one reference point can determine a coordinate at a central point of each of other wells 8 in usual measurement, determining at least two reference points by the above-described method can calculate a degree of inclination even if the microplate 7 is obliquely inclined, thus obtaining coordinates at central points of all the wells 8.

Furthermore, since the configuration of the optical system which is used for actual measurement of the sample is used as it is, a special mechanism or device for positional detection does not have to be provided.

Moreover, even in case of the microplate 7 such as a microplate 7 having 1,536 wells in which a size per well is extremely small, since accurate positioning and measurement can be carried out, measurement data for each well 8 can be accurately managed.

It is to be noted that the microplate 7 is used for calculation of a reference point in order to accurately grasp a position of each well 8, but the method described in this embodiment can be applied to the well 8 in which the sample is not accommodated. In this case, reflected light rather than fluorescence is returned from the microplate 7. Therefore, using a beam splitter in place of the dichroic mirror 4 can suffice.

It is to be noted that the functions described in each foregoing embodiment can be realized by not only using hardware but also reading a program in which each function is written by software into a computer. Additionally, each function may be configured by appropriately selecting software or hardware.

Further, each function can be also realized by reading a program stored in a non-illustrated storage medium into a computer. Here, the storage medium in this embodiment may take any conformation as long as it is a storage medium which can store a program and can be read by a computer.

It is to be noted that the present invention is not restricted to the foregoing embodiment, and the present invention can be embodied by modifying constituent elements without departing from the scope of the invention on an embodying stage. Furthermore, a plurality of constituent elements disclosed in the foregoing embodiments can be appropriately combined to form various inventions. For example, some of all constituent elements disclosed in the foregoing embodiments may be deleted. Moreover, constituent elements in different embodiments may be appropriately combined.

Industrial Applicability

The present invention can be extensively utilized in the industry which manufactures and uses a light measurement apparatus capable of simply measuring a position of each well in a microplate and an apparatus provided with this light measurement apparatus.

**Claims**

1. A light measurement apparatus **characterized by** comprising:

   a container which includes a sample tank;
   a lens which condenses light from a sample accommodated in the sample tank;
   a photodetector which detects light from the sample transmitted through the lens;
   position detecting means for detecting a position of the sample tank based on a detection output from the photodetector; and
   position adjusting means for setting the container or the lens based on a detection output from the position detecting means.

2. A light measurement apparatus **characterized by** comprising:

   a light source;
   a container which includes a sample tank;
   a lens which condenses light from the container;
   a photodetector which detects light from the container transmitted through the lens;
   position detecting means for detecting a position of the sample tank based on a detection output from the photodetector; and
   position adjusting means for setting the container or the lens based on a detection output from the position detecting means.

3. A light measurement apparatus **characterized by** comprising:

   a light source;
   a container which includes a sample tank;
   a lens which condenses light from a sample accommodated in the sample tank;
   a photodetector which detects light from the sample accommodated in the sample tank, wherein the light passes through the lens;
   position detecting means for detecting a position of the sample tank based on a detection output from the photodetector; and
   position adjusting means for setting the container or the lens based on a detection output from the position detecting means.

4. The light measurement apparatus according to one of claims 2 and 3, **characterized in that** the light measurement apparatus includes moving means for moving the container,
   wherein the position detecting means determines a substantially central position of a bottom surface of the sample tank, and
   the position adjusting means operates the moving means to match light emitted from the light source with the substantially central position of the bottom surface of the sample tank.

5. The light measurement apparatus according to one of claims 1 to 3, **characterized in that** the light measurement apparatus includes moving means for moving the container,
   wherein the position detecting means detects a position of the sample tank based on a detection output measured by the photodetector while moving the container by the moving means.

**6.** The light measurement apparatus according to one of claims 1 to 3, **characterized in that** the light measurement apparatus includes moving means for moving the container,
wherein the moving means moves the container in a plane vertical to an optical axis of the lens while holding the container.

**7.** The light measurement apparatus according to one of claims 1 to 5, **characterized in that** the container is a microplate.

**8.** The light measurement apparatus according to claim 7, **characterized in that** at least a wall of the microplate is formed of a resin and a bottom surface of the same is made of an optically transparent material.

**9.** The light measurement apparatus according to one of claims 1 to 5, **characterized in that** the photodetector is a semiconductor photodetector or a photomultiplier.

**10.** The light measurement apparatus according to one of claims 1 to 5, **characterized in that** the lens is an objective lens.

**11.** A light measurement apparatus **characterized by** comprising:

a light source;
a container which includes a sample tank which accommodates a fluorescent material;
moving means for moving the container;
a lens which condenses light from the light source onto the fluorescent material;
a photodetector which detects fluorescence from the fluorescent material;
position detecting means for detecting a substantially central position of a bottom surface of the sample tank based on a detection output from the photodetector; and
position adjusting means for operating the moving means to match light emitted from the light source with the substantially central position of the bottom surface of the sample tank.

**12.** The light measurement apparatus according to one of claims 2, 3 and 11, **characterized in that** the light source is equal to a light source which performs light illumination of the sample.

**13.** A light measurement method **characterized by** comprising:

holding a container which includes a sample tank;
condensing light from a sample accommodated in the sample tank by a lens;
detecting the light from the sample by a photodetector, wherein the light passes though the lens; and
moving a position of the lens or a position of the sample tank based on a detection output from the photodetector in such a manner that an optical axis of the lens runs through the sample tank.

**14.** A light measurement method **characterized by** comprising:

holding a container which includes a sample tank, and condensing light from the container by a lens;
detecting the light from the container by a photodetector, wherein the light passes through the lens; and
moving a position of the lens or a position of the container based on a detection output from the photodetector in such a manner that an optical axis of the lens runs through the sample tank.

F I G. 1

Wall surface

Sample

7

8      8      8

5

FIG. 2

0

Y1

y1 — Y2

Y3

y2 — Y4

⋮

y

7

8

0   X1 ⟨ X2   X3 ⟨ X4   - - -   x
        x1          x2

FIG. 3

12

FIG. 4

F I G. 5A

F I G. 5B

P

Detection signal 1

FIG. 6A

Detection signal 2

FIG. 6B

Detection signal 3

FIG. 6C

Detection signal 4

FIG. 6D

Detection signal 5

FIG. 6E

r : Radius

$$h_1 = \sqrt{r^2 - (l_1/2)^2} \quad , \quad h_5 = \sqrt{r^2 - (l_5/2)^2}$$

$$H = h_1 + h_5$$

# FIG. 7

FIG.8

F I G. 9

Resin wall

Nonluminescent glass
sheet

F I G. 10A

Resin wall

Nonluminescent glass
sheet

F I G. 10B

F I G. 11A

F I G. 11B

F I G. 11C

F I G. 11D

F I G. 11E

## INTERNATIONAL SEARCH REPORT

| | International application No. |
|---|---|
| | PCT/JP2005/004566 |

A. CLASSIFICATION OF SUBJECT MATTER
   Int.Cl$^7$  G01N21/64

According to International Patent Classification (IPC) or to both national classification and IPC

B.  FIELDS SEARCHED

Minimum documentation searched (classification system followed by classification symbols)
   Int.Cl$^7$  G01N21/00-21/74, G01N33/48-33/98

Documentation searched other than minimum documentation to the extent that such documents are included in the fields searched
   Jitsuyo Shinan Koho          1922-1996   Jitsuyo Shinan Toroku Koho   1996-2005
   Kokai Jitsuyo Shinan Koho    1971-2005   Toroku Jitsuyo Shinan Koho   1994-2005

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
|---|---|---|
| X | JP 2002-544476 A  (ACLARA BIOSCIENCES INC.), | 1-7,9,11-14 |
| Y | 24 December, 2002 (24.12.02),<br>Full text; Figs. 1, 3, 9<br>& WO 2000/068671 A2      & US 2003/0038248 A1<br>& EP 1192447 A            & CA 2373537 A | 1-7,9-14 |
| Y | JP 2004-70307 A  (Olympus Corp.),<br>04 March, 2004 (04.03.04),<br>Full text; Figs. 1, 4, 6<br>(Family: none) | 1-14 |
| Y | WO 2001/088593 A  (TROPHOS SA),<br>22 November, 2001 (22.11.01),<br>Full text; Figs. 1 to 3<br>& JP 2004-516495 A        & EP 1285301 A<br>& FR 2808888 A            & CA 2408731 A | 1-14 |

| ☒ | Further documents are listed in the continuation of Box C. | ☐ | See patent family annex. |
|---|---|---|---|

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 14 April, 2005 (14.04.05) | 10 May, 2005 (10.05.05) |

| Name and mailing address of the ISA/ | Authorized officer |
|---|---|
| Japanese Patent Office | |
| Facsimile No. | Telephone No. |

Form PCT/ISA/210 (second sheet) (January 2004)

EP 1 726 940 A1

**INTERNATIONAL SEARCH REPORT**

| International application No. |
|---|
| PCT/JP2005/004566 |

C (Continuation).  DOCUMENTS CONSIDERED TO BE RELEVANT

| Category* | Citation of document, with indication, where appropriate, of the relevant passages | Relevant to claim No. |
|---|---|---|
| Y | JP 2003-42713 A  (Asahi Kasei Corp.),<br>13 February, 2003 (13.02.03),<br>Full text; Figs. 2, 4<br>(Family: none) | 1-7,9-14 |
| Y | JP 2003-240704 A  (Toshiba Corp.),<br>27 August, 2003 (27.08.03),<br>Par. Nos. [0008] to [0009]; Fig. 1<br>(Family: none) | 8 |

Form PCT/ISA/210 (continuation of second sheet) (January 2004)

22

**EP 1 726 940 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002014035 A

- US 6258326 B